# EUROPÄISCHE PATENTSCHRIFT

(11) **EP 2 978 971 B1**
(45) Veröffentlichungstag und Bekanntmachung des Hinweises auf die Patenterteilung: **02.08.2017**
(21) Anmeldenummer: 13713140.5
(22) Anmeldetag: 25.03.2013
(51) Int. Cl.: F04B 53/10

(54) **BIMETALL VENTILBEGRENZUNG**
BIMETALLIC VALVE LIMITATION
LIMITEUR DE CLAPET À BILAME

(43) Veröffentlichungstag der Anmeldung: 03.02.2016
(73) Patentinhaber: Pierburg Pump Technology GmbH, 41460 Neuss (DE)
(72) Erfinder: KUHNEKATH, Andreas, 41236 Mönchengladbach (DE)
(74) Vertreter: Patentanwälte ter Smitten Eberlein-Van Hoof Rütten Partnerschaftsgesellschaft mbB
(86) Internationale Anmeldenummer: PCT/EP2013/056283
(87) Internationale Veröffentlichungsnummer: WO 2014/154239

(56) Entgegenhaltungen:
- FR-E- 93 448
- JP-U- S61 138 881
- US-A1- 2001 048 880

## Beschreibung

Die Erfindung bezieht sich auf eine Automobil-Verdrängerpumpe mit einer Pumpkammer, die über ein Rückschlagventil zugänglich ist. Das Rückschlagventil weist dabei einen Ventilkörper auf, der eine Ventilöffnung bedeckt.

Derartige Verdrängerpumpen werden im Automobilbereich vielfältig eingesetzt. Sie fördern Fluide, im Allgemeinen Flüssigkeiten, insbesondere flüssige Kühlmittel oder Schmiermittel, Die Verdrängerpumpen können aber auch als geschmierte Gaspumpe oder geschmierte Vakuumpumpe ausgebildet sein.

Automobil-Verdrängerpumpen werden für einen Temperaturbereich von - 40 °C bis + 160 °C ausgelegt. In diesem Temperaturintervall weisen Schmiermittel häufig große Viskositätsunterschiede auf. Abnehmende Umgebungstemperaturen begründen eine zunehmende Viskosität derartiger Schmiermittel. Dieser erhöhten Viskosität muss, um Beschädigungen zu vermeiden, konstruktiv mit einer Vergrößerung des Ventil-Öffnungsquerschnitts des Rückschlagventils entgegengewirkt werden, so dass auch bei niedrigen Temperaturen von bis zu - 40 °C ein ausreichend schneller Durchtritt des Schmiermittels sichergestellt werden kann.

Die erhöhte Viskosität des Schmiermittels und der hierfür erforderliche große Ventil-Öffnungsquerschnitt des Rückschlagventils führen jedoch zu großen Schließzeiten des Rückschlagventils. Die langen Schließzeiten verursachen bei einer hohen Pumpendrehzahl und warmem Schmiermittel einen hohen Rückfluss, der eine Verschlechterung des Wirkungsgrades begründet.

Aus dem Stand der Technik sind verschiedene Ventile zum Schutz von Verdrängerpumpen vor Beschädigungen bekannt. So wird beispielsweise in der JP 571 469 68 eine Ventilfeder aus einem an die Temperatur des Fluides angepassten Bimetall beschrieben. Auch die Druckschrift JP 581 606 75 offenbart einen Fluiddruckregier mit einer scheibenartigen Ventilfeder aus einem Bimetall. Hierdurch ist das Öffnungsverhalten des Ventilkörpers in hohem Maße temperaturabhängig. Eine ähnliche Pumpe ist aus JP-S61-138881 bekannt. Diese besitzt einen mechanischen Ventilwegbegrenzer der ein temperaturabhängiges Verhalten aufweist. Mit zunehmender Temperatur vergrössert sich der Ventilweg. Demgegenüber ist es eine Aufgabe der vorliegenden Erfindung, eine Automobil-Verdrängerpumpe mit einem verbesserten Wirkungsgrad zu schaffen.

Die Erfindung betrifft eine Automobil-Verdrängerpumpe mit einer Pumpkammer. Die Pumpkammer ist dabei über ein Rückschlagventil zugänglich. Das Rückschlagventil weist einen Ventilkörper und einen Ventilwegbegrenzer auf, wobei der Ventilkörper in seiner Schließposition die Ventilöffnung bedeckt und verschließt. Der Ventilwegbegrenzer definiert die Öffnungsposition des Ventilkörpers bei maximaler Öffnung und weist ein mechanisches Temperaturelement auf, das den Ventilweg mit abnehmender Temperatur vergrößert und mit zunehmender Temperatur verkleinert.

Das Verhalten des Ventilkörpers wird durch die Schmiermitteltemperatur nicht wesentlich beeinflusst, ist also im Wesentlichen temperaturunabhängig. Durch den temperaturabhängigen Ventilwegbegrenzer wird der Öffnungsweg des Ventils bei geringer Schmiermitteltemperatur so groß wie möglich eingestellt, wohingegen der Öffnungsweg bei hoher Schmiermitteltemperatur so klein wie möglich eingestellt wird.

Bei niedriger Schmiermitteltemperatur ist damit sichergestellt, dass das Schmiermittel trotz seiner hohen Viskosität vollständig und relativ widerstandsarm durch den großen Öffnungsquerschnitt bzw. Ventilöffnungsweg hindurch fließen kann. Bei hoher Schmiermitteltemperatur ist dagegen sichergestellt, dass der Ventilwegbegrenzer einen geringen Schließweg hat und dadurch schneller schließt. Dadurch ist der Wirkungsgrad insbesondere bei hohen Drehzahlen der Pumpe verbessert.

In einer bevorzugten Ausführung ist der Ventilkörper als eine Blattfeder ausgeführt. Diese Blattfeder stellt eine mechanisch einfache und zugleich preiswerte Ausführung eines Ventilkörpers dar. Zudem ist die Blattfeder elastisch bzw. flexibel ausgeführt.

Vorteilhafterweise wird der Ventilwegbegrenzer von einem Bimetallblatt gebildet. Der Ventilwegbegrenzer ist, im Gegensatz zum Ventilkörper, vorrangig steif ausgebildet. Der Ventilwegbegrenzer besteht aus einem Metall mit einem hohen linearen Ausdehnungskoeffizienten sowie aus einem Metall mit einem niedrigen linearen Ausdehnungskoeffizienten.

Liegt an dem Ventilwegbegrenzer ein Schmiermittel mit einer niedrigeren Temperatur an, also ein Schmiermittel mit einer höheren Viskosität, so ist der Ventilwegbegrenzer weiter in Öffnungsrichtung gebogen und der maximale Öffnungsweg des Rückschlagventils vergrößert. Bei Anliegen eines Schmiermittels mit einer höheren Temperatur, also einem Schmiermittel mit einer niedrigeren Viskosität, biegt sich der Ventilwegbegrenzer weiter in die Schließrichtung und der maximale Öffnungsweg des Rückschlagventils ist dementsprechend verkleinert.

Der Ventilwegbegrenzer hat somit sowohl die Funktion eines wegbegrenzenden Bauteils, als auch die eines temperaturveränderlichen Bauteils. Zudem ist er robust, zuverlässig, einfach zu montieren und preiswert herzustellen.

Alternativ kann der Ventilwegbegrenzer auch als ein Formgedächtniswerkstoff-Körper, insbesondere aus Nitinol, ausgeführt sein. Mit einem Formgedächtniswerkstoff kann auf einfache Art und Weise ein Element realisiert werden, das eine temperaturabhängige Öffnungsweg-Begrenzung des Ventils realisiert. Die Funktion des Formgedächtniswerkstoff-Körpers beruht dabei auf dem sogenannten Zweiweg-(Memory)-Effekt. Derartige Formgedächtnislegierungen können sich durch den Zweiweg-Effekt an zwei Formen - eine bei hoher und eine bei niedriger Temperatur - erinnern.

Als weitere alternative Ausführungsform kann der Ventilwegbegrenzer auch als ein Wachselement ausgeführt sein. Ein Wachselement ist preiswert, konstruktiv einfach und kann failsafe ausgelegt werden.

Vorzugsweise sind der Ventilkörper und der Ventilwegbegrenzer jeweils als Zunge ausgebildet, die mit ihrem einen Zungenende an der Pumpkammerwand fixiert sind. Dabei kann die Form des Ventilkörpers und des Ventilbegrenzers ähnlich zu der Form der Ventilöffnung sein. Somit können beide Bauelemente mit einem einzigen Befestigungselement fixiert sein, wodurch die Montage stark vereinfacht wird.

Bevorzugt ist ein einziges Rückschlagventil vorgesehen. In einer weiteren Ausführungsform können aber auch mehrere Rückschlagventile nebeneinander an der Pumpkammerwand angeordnet sein.

In einer weiteren Ausführungsform kann das Rückschlagventil auch "doppelzüngig" in einer "Schmetterlingsanordnung" ausgebildet sein, d.h., ausgehend von dem Befestigungsmittel, erstrecken sich zwei Flügel, nämlich die zungenförmigen Ventilwegbegrenzer und die zugeordneten Ventilkörper, über die beiden Ventilöffnungen der Pumpkammer. Die zwei Ventilwegbegrenzer und die zwei Ventilkörper, welche die Ventilöffnungen bedecken, sind nur mit einem einzigen Befestigungsmittel an der Pumpkammerwand angebracht. Dieses Befestigungsmittel kann dabei beispielsweise durch eine Schraube gebildet werden. Diese "Schmetterlingsanordnung" weist dabei den Vorteil auf, dass durch geringen konstruktiven Aufwand die Anzahl der Ventilöffnungen verdoppelt, und damit eine Vergrößerung des Ventilöffnungsquerschnittes realisiert wird.

In einer weiteren Ausführungsform ist das Rückschlagventil der Auslassseite zugeordnet. Darüber hinaus kann das Rückschlagventil zusätzlich auch auf der Einfassseite, d.h. auf der Saugseite, vorgesehen sein. Die letztere Anordnung ist für den Fall vorgesehen, in dem die Pumpe rückwärts läuft, wie dies bei einer mechanischen Verdrängerpumpe beim Rückwärtslauf des Verbrennungsmotors vorkommen kann.

In bevorzugter Weise ist die Automobil-Verdrängerpumpe eine ölgeschmierte Vakuumpumpe oder eine Schmiermittelpumpe. Das zu pumpende Fluid ist vorzugsweise ein Schmieröl, insbesondere dann, wenn das zu versorgende Aggregat ein zu schmierender Verbrennungsmotor ist. Es kann sich auch um eine ölgeschmierte Vakuumpumpe handeln, wobei über den Pumpkammer-Auslass nicht nur die Luft, sondern auch das Schmiermittel ausgestoßen werden muss.

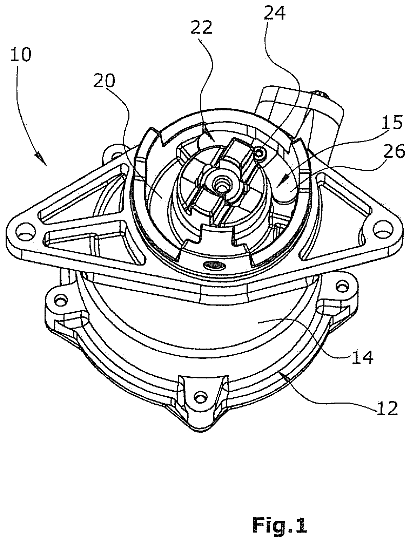

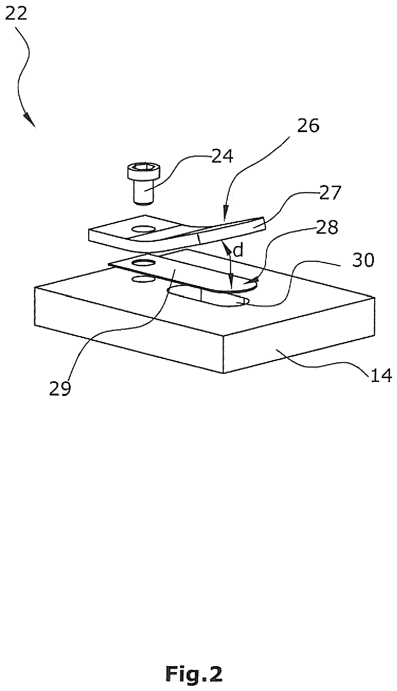

Ein Ausführungsbeispiel einer erfindungsgemäßen Vorrichtung ist in den folgenden Figuren 1 und 2 schematisch dargestellt und wird nachfolgend beschrieben.
- Figur 1: zeigt eine perspektivische Ansicht einer Automobil-Verdrängerpumpe mit einem Rückschlagventil, und
- Figur 2: zeigt einen Flügel des Rückschlagventils der Figur 1 vergrößert.

In der Figur 1 ist eine Automobil-Verdrängerpumpe 10 dargestellt, die vorliegend eine mit Schmiermittel geschmierte Vakuumpumpe ist. Die Verdrängerpumpe 10 stellt einen Unterdruck von unter 100mbar für Sekundäraggregate, beispielsweise einen Brennkraftverstärker usw. zur Verfügung. Zur Erhöhung des Wirkungsgrades und zur Verringerung des mechanischen Verschleißes ist die Vakuumpumpe 10 mit einem flüssigen Schmiermittel geschmiert.

Die Verdrängerpumpe 10 weist ein Pumpengehäuse 12 auf. Dieses Pumpengehäuse 12 umgibt eine Pumpkammer 14 mit mehreren Pumpkammerwänden 20. An einer der beiden stirnseitigen Pumpkammerwände 20 ist ein doppelzüngiges Rückschlagventil 22 angeordnet. Dieses Rückschlagventil 22 ist über ein Befestigungsmittel 24 an der Pumpkammerwand 14 angebracht, und öffnet oder schließt die beiden zugeordneten Ventilöffnungen 30.

Das erfindungsgemäße Rückschlagventil 22 wird im Folgenden unter Bezugnahme auf die Figur 2 beschrieben, die exemplarisch einen Flügel des doppelzüngigen Rückschlagventils 22 zeigt. Das Rückschlagventil 22 für die in Figur 1 abgebildete Verdrängerpumpe 10 weist jeweils einen Ventilwegbegrenzer 26 und einen Ventilkörper 28 auf. Sowohl der Ventilwegbegrenzer 26, als auch der Ventilkörper 28 bedecken die in der Pumpkammerwand 20 vorgesehene Ventilöffnung 30.

Der Ventilkörper 28 ist als Blattfeder 29 ausgebildet. Diese Blattfeder 29 weist eine gewisse Vorspannung des Ventilkörpers 28 in Schließrichtung auf. Durch diese Vorspannung ist ein Öffnungs- bzw. Grenzdruck definiert. Wenn der Schmiermitteldruck innerhalb der Pumpkammer 14 den Grenzdruck überschreitet, wird das Rückschlagventil 22 durch das Bewegen des Ventilkörpers 28 in Öffnungsrichtung geöffnet. Wenn der Druck des Schmiermittels weiter ansteigt, schlägt der Ventilkörper 28 gegen den Ventilwegbegrenzer 26, so dass der gesamte Ventilweg d geöffnet ist.

Bei einer geringen Schmiermitteltemperatur befindet sich der Ventilwegbegrenzer 26, der von einem als Bimetall-Blatt ausgebildeten Temperaturelement gebildet wird, in einer eher weit geöffneten Position. Erhöht sich die den Ventilwegbegrenzer 26 umgebende Temperatur des Schmiermittels, so bewegt sich der Ventilwegbegrenzer 26 in die Schließrichtung und der Ventilöffnungsweg d verkleinert sich. Dadurch ist die Menge des Schmiermittels, welche die Ventilöffnung 30 durchströmt, deutlich reduziert, wobei sich gleichzeitig die Schließzeit verkürzt.

Ein besonderer Vorzug besteht darin, dass das Rückschlagventil 22 sich in seiner äußeren Form und in seinen Anschlussdimensionen kaum von einem herkömmlichen Rückschlag- oder Überdruckventil unterscheidet, so dass die vorliegende Ausführung mit nur geringem Aufwand gegen ein konventionelles Ventil ausgetauscht werden kann.

## Patentansprüche

1. Automobil-Verdrängerpumpe (10) mit einer Pumpkammer (14), die über ein Rückschlagventil (22) zugänglich ist, durch das Schmiermittel fließt, wobei das Rückschlagventil (22) einen Ventilkörper (28) aufweist, der eine Ventilöffnung (30) bedeckt, wobei ein Ventilwegbegrenzer (26) vorgesehen ist, der ein mechanisches Temperaturelement (27) aufweist, **dadurch gekennzeichnet, dass** es den Ventilweg (d) mit abnehmender Temperatur vergrößert und mit zunehmender Temperatur verkleinert.

2. Automobil-Verdrängerpumpe (10) nach Anspruch 1, wobei der Ventilwegbegrenzer (26) von dem mechanischen Temperaturelement (27) gebildet ist.

3. Automobil-Verdrängerpumpe (10) nach Anspruch 1, wobei der Ventilkörper (28) eine Blattfeder (29) ist.

4. Automobil-Verdrängerpumpe (10) nach einem der vorangegangenen Ansprüche, wobei das Temperaturelement (27) von einem Bimetall-Blatt gebildet ist.

5. Automobil-Verdrängerpumpe (10) nach Anspruch 4, wobei das Temperaturelement von einem Formgedächtniswerkstoff-Körper, insbesondere aus Nitinol, gebildet ist.

6. Automobil-Verdrängerpumpe (10) nach Anspruch 4, wobei das Temperaturelement ein Wachselement aufweist.

7. Automobil-Verdrängerpumpe (10) nach einem der vorangegangenen Ansprüche, wobei der Ventilkörper (28) und der Ventilwegbegrenzer (26) jeweils als Zunge ausgebildet sind, die jeweils mit einem Zungenende an der Pumpkammerwand (20) fixiert sind.

8. Automobil-Verdrängerpumpe (10) nach einem der vorangegangenen Ansprüche, wobei das Rückschlagventil (22) einem Pumpkammer - Auslassventil (15) zugeordnet ist.

9. Automobil-Verdrängerpumpe (10) nach einem der vorangegangenen Ansprüche, wobei die Automobil-Verdrängerpumpe (10) eine ölgeschmierte Vakuumpumpe ist.

10. Automobil-Verdrängerpumpe (10) nach einem der vorangegangenen Ansprüche 1 bis 9, wobei die Automobil-Verdrängerpumpe (10) eine Schmiermittelpumpe ist.

## Claims

1. A displacement pump (10) for automobiles, comprising a pump chamber (14) accessible via a check valve (22) through which a lubricant flows, the check valve (22) comprising a valve body (28) configured to cover a valve opening (30), wherein a valve travel limiter (26) is provided which comprises a mechanical temperature element (27), **characterized in that** it is configured to increase a valve travel (d) as a temperature decreases and to reduce the valve travel as the temperature increases.

2. The displacement pump (10) for automobiles as recited in claim 1, wherein the valve travel limiter (26) is formed by the mechanical temperature element (27)

3. The displacement pump (10) for automobiles as recited in claim 1, wherein the valve body (28) is a leaf spring (29).

4. The displacement pump (10) for automobiles as recited in one of the preceding claims, wherein the temperature element (27) is formed by a bimetallic leaf.

5. The displacement pump (10) for automobiles, as recited in claim 4, wherein the temperature element is formed by a shape-memory material body, in particular of nitinol.

6. The displacement pump (10) for automobiles as recited in claim 4, wherein the temperature element comprises a wax element.

7. The displacement pump (10) for automobiles as recited in one of the preceding claims, wherein the valve body (28) and the valve travel limiter (26) are each formed as a tongue with one end of the tongue being fixed on the pump chamber wall (20).

8. The displacement pump (10) for automobiles as recited in one of the preceding claims, wherein the check valve (22) is assigned to a pump chamber outlet valve (15).

9. The displacement pump (10) for automobiles as recited in one of the preceding claims, wherein the displacement pump (10) for automobiles is an oil-lubricated vacuum pump.

10. The displacement pump (10) for automobiles as recited in one of the preceding claims 1 to 9, wherein the displacement pump (10) for automobiles is a lubricant pump.

## Revendications

1. Pompe volumétrique (10) pour automobiles, avec une chambre de pompage (14) accessible par un clapet de retour (22) à travers lequel s'écoule un lubrifiant, ledit clapet de retour (22) comprenant un corps de clapet (28) qui recouvre une ouverture de clapet (30), un limiteur de déplacement de clapet (26) étant prévu qui comporte un élément de température (27) mécanique, **caractérisée en ce qu'**elle augment le déplacement du clapet (d) quand la température diminue et réduit le déplacement de clapet quand la température augmente.

2. Pompe volumétrique (10) pour automobiles selon la revendication 1, dans laquelle ledit limiteur de déplacement de clapet (26) est formé par ledit élément de température (27) mécanique.

3. Pompe volumétrique (10) pour automobiles selon la revendication 1, dans laquelle ledit corps de clapet (28) est un ressort à lame (29).

4. Pompe volumétrique (10) pour automobiles selon l'une quelconque des revendications précédentes, dans laquelle ledit élément de température (27) est formé par une lame bimétallique.

5. Pompe volumétrique (10) pour automobiles selon la revendication 4, dans laquelle ledit élément de température est formé par corps en un matériau à mémoire de forme, particulièrement en nitinol.

6. Pompe volumétrique (10) pour automobiles selon la revendication 4, dans laquelle ledit élément de température comprend un élément à cire.

7. Pompe volumétrique (10) pour automobiles selon l'une quelconque des revendications précédentes, dans laquelle ledit corps de clapet (28) et ledit limiteur de déplacement de clapet (26) sont chacun réalisés en forme de languettes, dont une extrémité de chaque languette est fixée sur une paroi de la chambre de pompage (20).

8. Pompe volumétrique (10) pour automobiles selon l'une quelconque des revendications précédentes, dans laquelle ledit clapet de retour (22) est associé à une soupape de sortie (15) de la chambre de pompage.

9. Pompe volumétrique (10) pour automobiles selon l'une quelconque des revendications précédentes, dans laquelle ladite pompe volumétrique (10) pour automobiles est une pompe à vide lubrifiée à l'huile.

10. Pompe volumétrique (10) pour automobiles selon l'une quelconque des revendications précédentes 1 à 9, dans laquelle ladite pompe volumétrique (10) pour automobiles est une pompe à lubrifiant.
